(19) Europäisches Patentamt

European Patent Office

Office européen des brevets

(11) **EP 1 420 267 B1**

(12) **EUROPÄISCHE PATENTSCHRIFT**

(45) Veröffentlichungstag und Bekanntmachung des Hinweises auf die Patenterteilung:
**03.05.2006 Patentblatt 2006/18**

(51) Int Cl.:
*G01S 13/93* (2006.01)    *H01Q 1/32* (2006.01)

(21) Anmeldenummer: **04003251.8**

(22) Anmeldetag: **28.06.2000**

(54) **Radarsensor und Radarantenne für ein Überwachen der Umgebung eines Kraftfahrzeugs**

Radar sensor and radar antenna for monitoring the environment of a motor vehicle

Détecteur radar et antenne radar pour la surveillance de l'environnement d'un véhicule a moteur

(84) Benannte Vertragsstaaten:
**DE ES FR GB IT SE**

(30) Priorität: **30.07.1999 DE 19935542**
         **23.10.1999 DE 19951123**

(43) Veröffentlichungstag der Anmeldung:
**19.05.2004 Patentblatt 2004/21**

(62) Dokumentnummer(n) der früheren Anmeldung(en) nach Art. 76 EPÜ:
**00943921.7 / 1 245 059**

(73) Patentinhaber: **Volkswagen Aktiengesellschaft**
**38436 Wolfsburg (DE)**

(72) Erfinder:
• **Lissel, Ernst**
  **38442 Wolfsburg (DE)**
• **Jacob, Arne**
  **38116 Braunschweig (DE)**
• **Schlachetzki, Andreas**
  **38126 Braunschweig (DE)**
• **Wehmann, Hergo-H.**
  **38527 Meine (DE)**
• **Peiner, Erwin**
  **38108 Braunschweig (DE)**
• **Schröter, Holger**
  **81371 München (DE)**
• **Oberschmidt, Gerald**
  **76707 Hambrücken (DE)**
• **Metz, Carsten**
  **37181 Hardegsen (DE)**

(74) Vertreter: **Meyer, Enno**
**Tegel & Meyer**
**Patentanwälte**
**Augsburger Strasse 24**
**82110 Germering (DE)**

(56) Entgegenhaltungen:
**WO-A-99/27385          US-A- 5 929 802**

• **RUSSELL E ET AL: "MILLIMETER-WAVE RADAR SENSOR FOR AUTOMOTIVE INTELLIGENT CRUISE CONTROL (ICC)" IEEE TRANSACTIONS ON MICROWAVE THEORY AND TECHNIQUES, US,IEEE INC. NEW YORK, Bd. 45, Nr. 12, PART 02, 1. Dezember 1997 (1997-12-01), Seiten 2444-2452, XP000732032 ISSN: 0018-9480**

**Beschreibung**

Die vorliegende Erfindung betrifft eine Radarantenne, die insbesondere für ein Überwachen der Umgebung eines Kraftfahrzeuges geeignet ist, gemäß dem Oberbegriff des Anspruchs 1.

Derartige Radarantennen werden für unterschiedliche Komfort- und sicherheitsrelevante Fahrerassistenz-Systeme benötigt. Sie verwenden in Fahrtrichtung nach vorne ausgerichtete Sensoren, um Informationen über den Verkehr und Hindernisse auf der Straße zu sammeln. Diese Informationen werden von dem zugeordneten Fahrerassistenz-System verwendet, um eine automatische Distanzregelung oder eine automatische Notbremsfunktion durchzuführen oder für Anwendungen aus dem Bereich der adaptiven Fahrtregelung, der Kollisionsverhinderung und für das zukünftige autonome Fahren von Fahrzeugen zu verwenden.

Aus der IEEE Transactions on Mircowave Theory and Techniques, VOL. 45, NO. 12 Dezember 1997, "Milimeter-Wave Radar Sensor for Automotive Intelligent Cruise Control (ICC)", M. E. Russell et al. ist ein Radarsensor bekannt, der eine Steuerschaltung und eine Radarantenne aufweist, wobei die Steuerschaltung als Sende- und Empfangsmodul ausgebildet ist und wobei die Radarantenne mit mindestens einer Zuleitung mit der Steuerschaltung verbunden ist. Ein Teil der Steuerschaltung ist dabei als MMIC (monolithic millimeterwave integrated circuit) ausgebildet. Darüber hinaus ist die Radarantenne in Form eines gedruckten Schaltkreises ausgebildet und weist eine Rotmanlinse und eine Gruppenantenne auf. Die Rotmanlinse weist eine linsenförmige Parallelplattenleitung, mindestens zwei Zuleitungsanschlüsse, eine Mehrzahl von Ankopplungsanschlüssen und Verzögerungsleitungen auf. Weiterhin ist die Gruppenantenne aus einer Mehrzahl von Einzelantennen aufgebaut, die zu mindestens zwei Reihen in Serie geschaltet sind. Jede dieser Reihe von Einzelantennen ist mit einer Verzögerungsleitung verbunden, die das von der Parallelplattenleitung an den zugeordneten Ankopplungsanschluß abgegebene hochfrequente Signal auf die Reihe von Einzelantennen überträgt.

Ferner zeigen die Druckschriften WO 99 27 385 A, US-A-5 929 802 und US-A-5 675 345 eine Radarantenne nach dem Oberbegriff des Anspruchs 1.

Bei der oben beschriebenen, aus dem Stand der Technik bekannten Radarantenne besteht ein Problem darin, daß die gesamte Radarantenne aufgrund der Anordnung der Rotmanlinse und der Gruppenantenne im rechten Winkel zueinander ein großes Volumen einnimmt. Somit können nur ungenügend die Anforderungen an die Abmessungen einer Radarantenne erfüllt werden, um ihn bspw. im Bereich der Stoßstange eines Kraftfahrzeuges anzuordnen.

Der Erfindung liegt daher das technische Problem zugrunde, die aus dem Stand der Technik bekannte Radarantenne derart auszugestalten und weiterzubilden, daß die zuvor beschriebenen Nachteile des Standes der Technik behoben werden.

Die Aufgabe wird durch eine Radarantenne mit den Merkmalen des Anspruchs 1 gelöst. Bevorzugte Ausgestaltungen der Erfindung sind Gegenstand der Unteransprüche.

Gemäß der vorliegenden Erfindung wird das oben genannte technische Problem gelöst durch eine Radarantenne mit einer Rotmanlinse, die eine linsenförmige Parallelplattenleitung, mindestens zwei Zuleitungsanschlüsse, eine Mehrzahl von Ankopplungsanschlüssen und Verzögerungsleitungen aufweist, und mit einer Gruppenantenne, die eine Mehrzahl von Einzelantennen aufweist, die zu mindestens zwei Reihen jeweils in Serie geschaltet sind, wobei die Rotmanlinse und die Gruppenantenne im wesentlichen parallel und beabstandet zueinander angeordnet sind.

Bei dieser Anordnung wird in vorteilhafter Weise eine platzsparende Anordnung von Rotmanlinse und Gruppenantenne erreicht, so daß eine planare Ausführung der Radarantenne und darüber hinaus des Radarsensors möglich wird, die einen Einsatz in einem Kraftfahrzeug erheblich vereinfacht. Somit ist es bspw. möglich, eine flächige Radarantenne in die Stoßstange eines Kraftfahrzeuges zu integrieren. Dieser schließt die Anordnung der Rotmanlinse und der Gruppenantenne auf einen Substrat nebeneinander mit ein.

Bei einer bevorzugten Ausgestaltung sind die Rotmanlinse und die Gruppenantenne auf zwei verschiedenen Substraten ausgebildet, wobei die beiden Substrate mit ihren der Rotmanlinse bzw. der Gruppenantenne abgewandten Seite miteinander verbunden sind und wobei zwischen den beiden Substraten eine gemeinsame Metallisierungsschicht angeordnet ist. Diese dient bevorzugt als gemeinsame Masse für die Rotmanlinse und die Gruppenantenne.

In weiter bevorzugter Weise sind in der Metallisierungsschicht Koppelschlitze ausgebildet, die die Antennenanschlüsse der Reihen von Einzelantennen der Gruppenantenne mit den Anschlußpunkten der Verzögerungsleitungen elektromagnetisch koppeln. Damit sind zwei wesentliche Vorteile verbunden. Zum einen braucht keine metallische Verbindung zwischen den Verzögerungsleitungen und den Reihen von Einzelantennen hergestellt werden. Zum anderen wird die Gruppenantenne durch das von der Rotmanlinse erzeugte elektromagnetische Feld nur an den dafür vorgesehenen Koppelschlitzen beeinflußt, im übrigen dient die Metallisierungsschicht einer Abschirmung zwischen der Rotmanlinse und der Gruppenantenne.

Weiterhin bevorzugt sind die Anschlußpunkte der Reihen von Einzelantennen im wesentlichen in der Mitte der Reihen angeordnet, wodurch eine symmetrische Amplitudenverteilung auf die Einzelantennen innerhalb einer Reihe von Einzelantennen erreicht wird. Dadurch wird die Richtcharakteristik der Radarantenne weiter verbessert.

Weitere Merkmale und Vorteile der vorliegenden Erfindung sind in der nachfolgenden Beschreibung von Ausführungsbeispielen näher erläutert. Dabei wird auf die beigefügte Zeichnung bezug genommen. In dieser zeigen

Fig. 1 ein Kraftfahrzeug mit einem Radarsensor, die Abstrahlcharakteristik darstellend,

Fig. 2 ein Blockschaltbild des Radarsensors,

Fig. 3 ein erstes Beispiel eines Radarsensors im Querschnitt,

Fig. 4 ein zweites Beispiel eines Radarsensors im Querschnitt,

Fig. 5 eine Explosionsdarstellung zur Darstellung der Montage eines Schaltungsträgers,

Fig. 6 eine Explosionsdarstellung einer erfindungsgemäßen Radarantenne,

Fig. 7 eine Teilansicht der in Fig. 6 dargestellten Radarantenne im Querschnitt,

Fig. 8 eine Einzelantenne in einer Draufsicht,

Fig. 9 einen Ausschnitt aus einer Reihe von Einzelantennen in einer Draufsicht und

Fig. 10 zwei Reihen von Einzelantennen, die Position der Koppelschlitze darstellend.

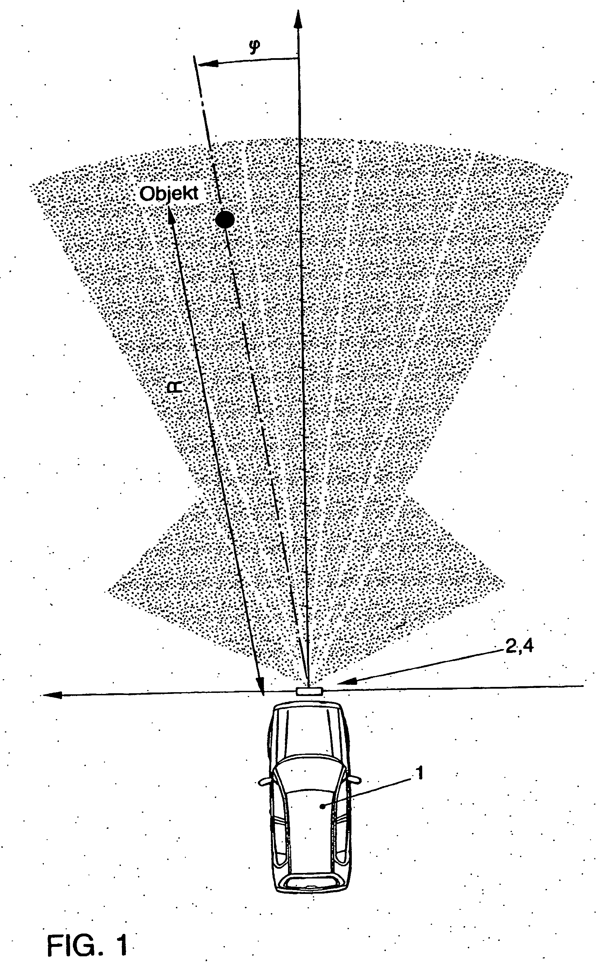

Fig. 1 zeigt ein Kraftfahrzeug 1, das an seinem vorderen Ende im Bereich der Stoßstange einen Radarsensor 2 mit einer Radarantenne 4 aufweist, die eine azimutale Richtcharakteristik aufweist, die für verschiedene Winkelabschnitte φ eine separate Empfindlichkeit aufweist. Somit können Objekte winkelaufgelöst erfaßt werden, um die Umgebung des Kraftfahrzeuges 1 zu charakterisieren. Neben dem Winkel φ ist zudem die Bestimmung des Abstandes R und der relativen Geschwindigkeit v möglich, so daß vorausfahrende Fahrzeuge oder Gegenstände auf der Fahrbahn erkannt werden können, um somit das Fahrverhalten des Kraftfahrzeuges 1 zu beeinflussen.

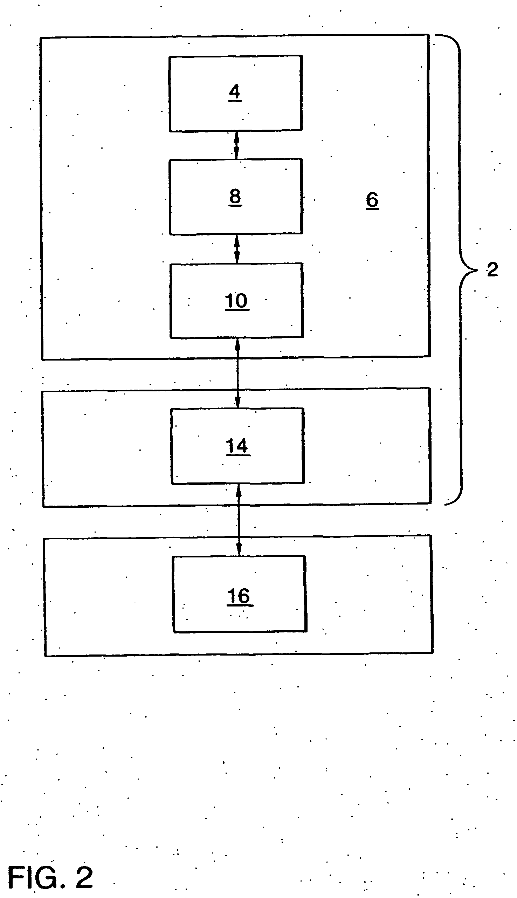

Fig. 2 zeigt mit einem Blockschaltbild den generellen Aufbau des gesamten Radarsensors sowie eines nachgeschalteten Auswertesystems. Im Frontend 6 sind die Radarantenne 4, eine Steuerschaltung 8 und ein Analog/Digital-Wandler 10 angeordnet. Die Steuerschaltung 8 ist dabei als Sende- und/oder Empfangsmodul ausgebildet und weist mindestens ein MMIC-Bauelement auf. Die Radarantenne 4 ist mit mindestens einer Zuleitung 12 mit der Steuerschaltung 8 verbunden.

Der Analog/Digital-Wandler 10 ist mit einem als elektronische Steuerungseinheit ausgebildeten ersten Steuergerät 14 verbunden, das wiederum mit einem zweiten Steuergerät verbunden ist, das bspw. als fahrzeuginterner Auswerterechner ausgebildet ist. In diesem findet die Auswertung der von der Radarantenne 4 empfangenen Signale statt, um in geeigneter Weise auf das Fahrverhalten des Kraftfahrzeuges 1 einzuwirken. Die elektronische Steuerungseinheit des ersten Steuergerätes 14 dagegen dient nicht nur zur Auswertung der von der Radarantenne 4 empfangenen Signale, sondern auch der Ansteuerung der Radarantenne 4 zum Aussenden von Radarsignalen. Daher ist bei dem in Fig. 2 dargestellten Beispiel die Radarantenne 4 monostatisch ausgebildet, dient also sowohl als Sendeantenne als auch als Empfangsantenne. Dagegen ist selbstverständlich auch eine bistatische Ausgestaltung des Radarsensors mit zwei verschiedenen Radarantennen 4 möglich, von denen eine als Sendeantenne und die andere als Empfangsantenne dient. Diese können unterschiedlich dimensioniert sein und jeweils an die Anforderungen als Sende- oder Empfangsantenne angepaßt sein. So reicht bspw. eine kleine Sendeantenne zum vollständigen Ausleuchten des zu überwachenden Bereiches aus, während die Empfangsantenne aufgrund der notwendigen Winkelauflösung eine größere Antennenfläche aufweist.

Eine zentrale Einheit des Radarsensors 2 ist die Steuerschaltung 8, die als Sende- und Empfangsmodul ausgebildet ist. Sie hat zum einen die Aufgabe, das frequenzmodulierte Radarsignal mit ausreichender Leistung der Radarantenne 4 zur Verfügung zu stellen. Zum anderen mischt die Steuerschaltung 8 das von der Radarantenne 4 empfangene Signal mit einem Lokaloszillatorsignal, so daß ein Signal im Basisband entsteht. Die Steuerschaltung 8 als Sende- und Empfangsmodul stellt somit die Schnittstelle zwischen der Signalverarbeitung und der Radarantenne 4 bzw. den Radarantennen 4 dar. Bei dem Radarsensor 2 sind sowohl die Radarantenne 4 als auch die Steuerschaltung 8 in planarer Technik aufgebaut. Wie bereits erwähnt, weist dazu die Steuerschaltung 8 MMIC-Bauelemente auf.

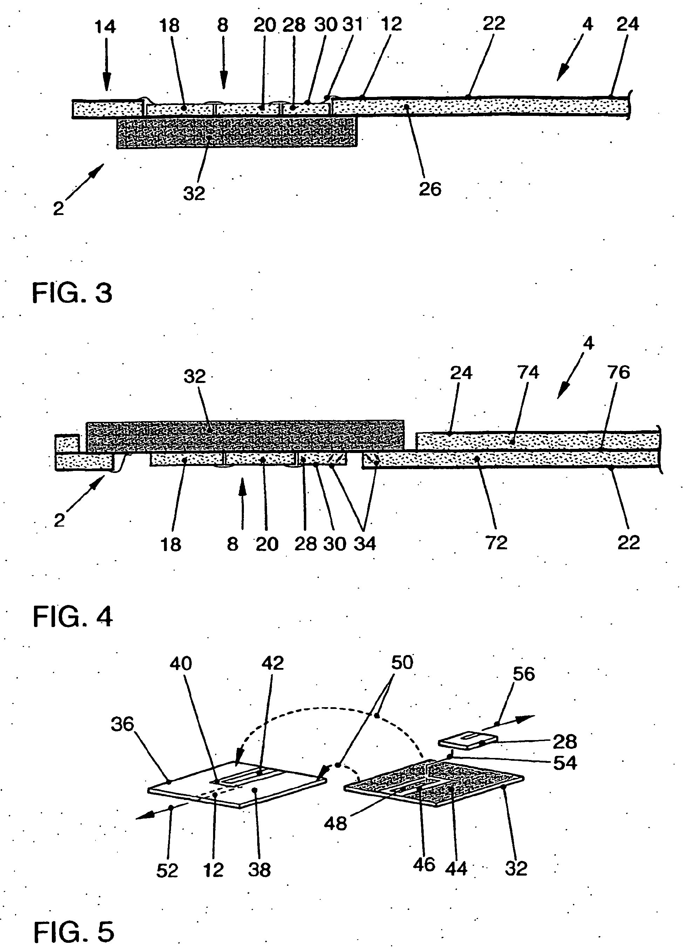

In Fig. 3 ist schematisch ein erstes Beispiel eines Radarsensors dargestellt. Die Steuerschaltung 8 weist zwei MMIC-Bauelemente 18 und 20 auf, die unter anderem die Funktionen des Ozillators und eines I/O-Mischers realisieren. Weiterhin weist der Radarsensor eine planare Radarantenne 4 auf, die - wie unten näher erläutert wird - eine Rotmanlinse 22 und eine Gruppenantenne 24 aufweist, die auf einem Substrat 26 aufgebracht sind.

Weiterhin ist ein Leitungsträger 28 vorgesehen, auf dem Leitungen 30 ausgebildet sind, die zur Übertragung von Hochfrequenzsignalen zwischen den MMIC-Bauelementen 18 und 20 der Steuerschaltung 8 und den Zuleitungen 12 der Radarantenne 4 dienen. Dazu ist der Leitungsträger 28 zwischen der Steuerschaltung 8, also den MMIC-Bauelementen 18 und 20, und der Radarantenne 4 angeordnet.

Wie weiterhin Fig. 3 zeigt, verlaufen die auf dem Leitungsträger 28 ausgebildeten Leitungen 30 im wesentlichen in einer Ebene parallel zu den Leiterbahnen der Steuerschaltung 8 und den Zuleitungen 12 der Radarantenne 4. Dadurch wird erreicht, daß die Verbindungen zwischen den Leitungen 30 und den Zuleitungen 12 der Radarantenne 4 bzw. den MMIC-Bauelementen 18 bzw. 20 sehr kurz ausgebildet werden können. Dadurch werden insbesondere die Verluste bei der Übertragung der Hochfrequenzensignale auf ein Minimum beschränkt.

Dieses gilt insbesondere dann, wenn die Leitungen 30 im wesentlichen auf einer gleichen Höhe wie die Leiterbahnen der Steuerschaltung 8 verlaufen, wie Fig. 3 zeigt. Da der Höhenunterschied zwischen dem Leitungsträger 28 und den Zuleitungen 12 zur Radarantenne 4 ebenfalls nur gering ausfällt, wird hier die Wirkung kurzer Verbindungen ebenfalls realisiert. Vorliegend ist als Verbindung eine Drahtbondverbindung 31 gewählt worden.

Eine sehr gute Anpassung der Leitungen 30 zur Übertragung von Hochfrequenzsignalen besteht darin, daß diese als Mikrostreifenteitungen auf dem Leitungsträger 28 ausgebildet sind. Dazu ist der Leitungsträger 28 bspw. aus GaAs oder $Al_2O_3$ hergestellt.

Die Herstellung von Mikrostreifenleitungen auf GaAs-Basis erfolgt in einer Mehrzahl von Herstellungsschritten.

In einem ersten Schritt wird ein Wafer in Proben zerteilt, die für die Herstellung der Leitungsträger sinnvolle Größen haben. Dieses geschieht durch Ritzen einer Sollbruchstelle mit einem Diamanten und Brechen des Wafers über einer Kante. Anschließend wird das Waferstück auf eine erforderliche Dicke mittels eines naßchemischen Ätzpolierverfahrens gedünnt. Neben dem Ätzangriff der Ätzlösung, wie bspw. Brommethanollösung, wird die Dickenreduktion auch durch einen rein mechanischen Abrieb auf einem Poliertuch unterstützt. Danach erfolgt eine Reinigung der Waferstücke, um eine gute Haftung der Metallisierung auf dem GaAs sicherzustellen. Dazu werden sowohl das Eigenoxid als auch organische Verschmutzungen von der Halbleiteroberfläche entfernt. Unmittelbar anschließend erfolgt die Metallisierung, um eine Neubildung von Eigenoxid auf der Probenoberflächen zu verhindern. Die Metallisierung besteht aus einem 10nm dicken Haftgrund aus Chrom, einer 100nm dick aufgedampften Goldschicht und schließlich $3\mu m$ galvanisch aufgebrachtem Gold. Da eine Mikrostreifenleitung ihr Massepotential auf der Substratunterseite hat, müssen beide Seiten des Waferstückes, das als Substrat dient, mit einer Metallisierung versehen werden. Vor der danach folgenden Lithographie wird die Probe, die aus dem Substrat und der Metallisierung besteht, mit einem Fotolack auf einem Glasträger geklebt. Mit diesem Schritt wird zum einen die Handhabung des empfindlichen GaAs erleichtert und zum anderen wird während des Ätzens die Metallisierung auf der Probenrückseite geschützt. Nach dem Ätzschritt wird der Fotolack in Azeton aufgelöst und die Probe somit wieder von ihrem Träger gelöst. Um sicherzustellen, daß keine Lackreste auf der Probe zurückbleiben, werden diese einem Lackveraschungsschritt unterzogen, so daß vor allem auf den Leiterbahnen keine Lackreste zurückbleiben, die zu einer verschlechterten Haftung eines Bonddrahtes führen. Schließlich werden die Proben hochgenau zu den GaAs-Leitungsträgern zugeschnitten.

Wie Fig. 3 weiterhin zeigt, ist ein Schaltungsträger 32 vorgesehen, der eine stabile Grundlage für die Montage der empfindlichen MMIC-Bauelemente 18 und 20 sowie für den Leitungsträger 28 darstellt. Dazu sind diese mit dem Schaltungsträger 32 mit einem Klebstoff verbunden. Zusätzlich ist die Radarantenne 4 teilweise ebenfalls mit dem Schaltungsträger 32 verbunden. Um eine stabile Grundlage für die verschiedenen Elemente zu bieten, ist das Material des Schaltungsträgers 32 an das thermische Ausdehnungsverhalten der Substrate der MMIC-Bauelemente 18 und 20, des Leitungsträgers 28 und der Radarantenne 4 angepaßt, der insbesondere beim Einsatz mit einem Kraftfahrzeug große Temperaturunterschiede auftreten. Dazu ist im vorliegenden Ausführungsbeispiel $Al_2O_3$ ausgewählt worden. Zudem sind direkt auf dem Substrat des Schaltungsträgers 32 Leitungen zur Spannungsversorgung und zur Verbindung mit dem ersten Steuergerät 14 ausgebildet.

Wie im Zusammenhang mit dem in den Fig. 4 und 5 dargestellten zweiten Beispiel näher erläutert wird, weist der Schaltungsträger 32 darüber hinaus auch eine weitere Funktion auf.

Wie in Fig. 4 dargestellt ist, sind auch bei diesem Beispiel die MMIC-Bauelemente 18 und 20, der Leitungsträger 28 und teilweise die Radarantenne 4 mit dem Schaltungsträger 32 verbunden. Im Gegensatz zu dem in Fig. 3 dargestellten Beispiel ist jedoch der Leitungsträger 28 nicht mittels einer Drahtbondverbindung 31, sondern mit Hilfe einer elektromagnetischen Feldkopplung 34 verbunden, wie anhand der Fig. 5 näher erläutert wird.

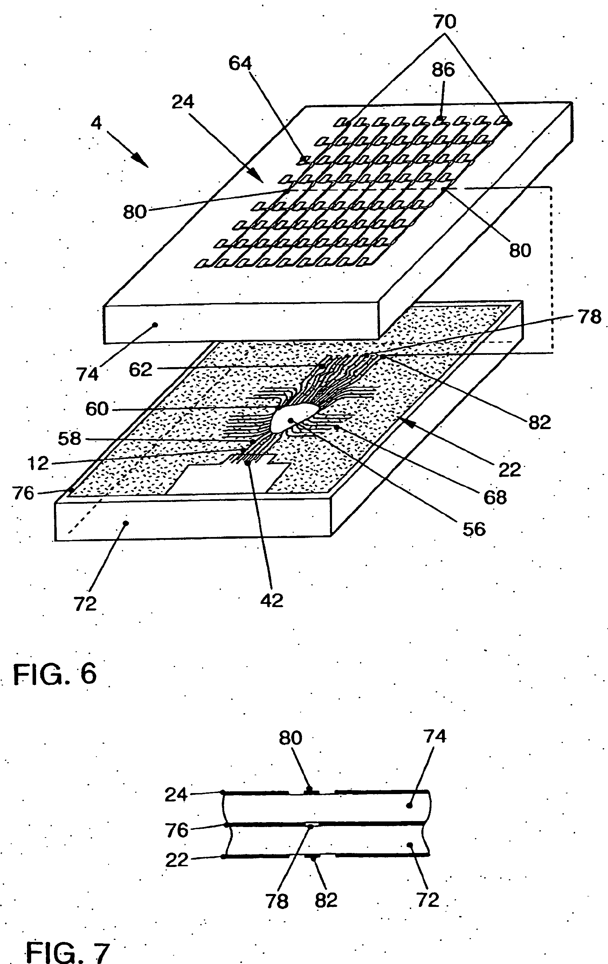

Das Substrat 36, auf dem die Radarantenne 4 zumindest teilweise ausgebildet ist, nämlich in Form der Rotmanlinse 22, weist auf der in Fig. 5 oben dargestellten Seite eine Massemetallisierung auf, die eine Aussparung 40 und darin eine Koplanarleitung 42 aufweist. Auf der in Fig. 5 oben dargestellten Oberfläche des Schaltungsträgers 32 ist symmetrisch zu der Ausgestaltung der Oberfläche des Substrates 36 eine Massemetallisierung 44, eine Aussparung 46 und eine Koplanarleitung 48 ausgebildet. Wie mit dem Pfeilen 50 dargestellt ist, wird der Schaltungsträger 32 mit der in Fig. 5 nach oben dargestellten Oberfläche umgedreht auf dem Substrat 36 zur Anlage gebracht, wodurch die beiden Koplanarleitungen 42 und 48 zumindest teilweise überlappend aneinander anliegen. Somit entsteht ein elektrischer Kontakt zwischen beiden Koplanarleitungen 42 und 48. Die Koplanarleitungen 42 sind auch in Fig. 6 in ihrer Anordnung relativ zu den Zuleitungen 12 dargestellt.

Auf der Unterseite des Substrates 36 ist in Fig. 5 mit gestrichelten Linien eine Zuleitung 12 dargestellt, die als Mikrostreifenleitung ausgebildet ist. Der Pfeil 52 deutet dabei in Richtung der Radarantenne 4, insbesondere der Rotmanlinse 22.

Auf der anderen Seite wird der Leitungsträger 28, der eine Leitung 30 in Form einer Mikrostreifenleitung aufweist mit der der Leitung 30 abgewandten Oberfläche auf dem Schaltungsträger 32 befestigt, wie mit dem Pfeil 54 dargestellt ist. Der Pfeil 56 weist dagegen in Richtung der Steuerschaltung 8, mit der die Leitung 30 verbunden ist.

Sowohl die Zuleitung 12 als auch die Leitung 30 sind nicht mit den Koplanarleitungen 42 bzw. 48 elektrisch leitend verbunden, sondern sie sind jeweils durch die Substrate 36 bzw. 32 von den Koplanarleitungen 42 bzw. 48 beabstandet angeordnet. Somit wird die Leitung 30 mit der Zuleitung 12 über eine Serienschaltung von zwei Mikrostreifen-Koplanar-Übergängen elektromagnetisch miteinander gekoppelt. Der erste Übergang verbindet dabei den Leitungsträger 28 mit dem Schaltungsträger 32 und der zweite Übergang gewährleistet die Ankopplung der Rotmanlinse 22 mit dem Schaltungsträger 32. Dabei erfolgt die Verbindung der beiden Koplanarleitungen 42 und 48 galvanisch durch eine Flip-Chip-Montage. Dadurch wird nicht nur eine vereinfachte Montage erreicht, sondern es treten auch geringere elektrische Verluste gegenüber einer Drahtbondverbindung auf. Nicht zuletzt wird auch die oben beschriebenen modulare Bauweise des Radarsensors durch die Flip-Chip-Montage vereinfacht, da ohne größere Anpassungsprobleme unterschiedliche MMIC-Bauelemente verschiedener Steuerschaltungen mit dem Schaltungsträger 32 und der Radarantenne 4 verbunden werden können. Zudem ist die zuvor beschriebene Bauweise platzsparend.

In Fig. 6 ist ein Ausführungsbeispiel einer erfindungsgemäßen Radarantenne 4 in einer Explosionsdarstellung gezeigt. Die Rotmanlinse 22 weist eine Parallelplattenleitung 56, Zuleitungsanschlüsse 58, Ankopplungsanschlüsse 60 und Verzögerungsleitungen 62 auf. Darüber hinaus weist die Gruppenantenne 24 Einzelantennen 64 auf, die in Reihen 70 in Serie geschaltet sind. Dabei unterscheiden sich die Reihen 70 von Einzelantennen von denen des ersten Ausführungsbeispieles dadurch, daß, wie in folgenden detailliert beschrieben wird, die Einkopplung der elektromagnetischen Signale im wesentlichen in der Mitte der Reihen 70 erfolgt. Erfindungsgemäß sind nun die Rotmanlinse 22 und die Gruppenantenne 24 parallel und beabstandet zueinander angeordnet. Daher sind Rotmanlinse 22 und Gruppenantenne 24 zumindest teilweise sich überlappend übereinander angeordnet. Dazu ist die Rotmanlinse 22 auf einem ersten Substrat 72 und die Gruppenantenne auf einem zweiten Substrat 74 ausgebildet. Die beiden Substrate 72 und 74 sind mit ihren der Rotmanlinse 22 bzw. der Gruppenantenne 24 abgewandten Seiten miteinander mittels einer gemeinsamen Metallisierungsschicht 76 miteinander verbunden. Dabei dient die Metallisierungsschicht 76 als gemeinsame Massepotential. Der zweischichtige Aufbau der Radarantenne 4 ist ebenfalls in Fig. 4 sowie in Fig. 7 dargestellt.

Die Kopplung zwischen der Rotmanlinse 22 und der Gruppenantenne 24 erfolgt mittels einer elektromagnetischen Feldkopplung, wie sie bereits oben für die verschiedenen Bauelemente des Radarsensors 2 beschrieben worden ist. Dazu sind Koppelschlitze 78 in der Metallisierungsschicht 76 ausgebildet, die die Anschlußpunkte 80 der Reihen 70 der Einzelantennen 64 mit den Anschlußpunkten 82 der Verzögerungsleitungen 62 elektromagnetisch koppeln. Somit wird das elektromagnetische Feld ausgehend von den Anschlußpunkten 82 durch das Substrat 22, durch die Koppelschlitze 78 hindurch und durch das Substrat 74 auf die Anschlußpunkte 80 der Gruppenantenne 24 übertragen. Da darüber hinaus die Metallisierungsschicht 76 im wesentlichen vollflächig ausgebildet ist, wird in vorteilhafter Weise eine gute Abschirmung der Rotmanlinse 22 von der Gruppenantennne 24 erreicht.

Die Positionierung und Ausgestaltung eines Koppelschlitzes 78 und zweier Anschlußpunkte 80 und 82 ist auch in Fig. 7 dargestellt. Da der Koppelschlitz 78 nur einen beschränkten räumlichen Bereich zur elektromagnetischen Kopplung der beiden Anschlußpunkte 80 und 82 vorgibt, findet zum einen eine genaue definierte Anregung der Reihen 70 statt und zum anderen ist eine gute Abschirmung in den Bereichen außerhalb der Koppelschlitze 78 gewährleistet.

Zuvor ist die Ansteuerung der Gruppenantenne 24 als Sendeantenne beschrieben worden, wobei die elektromagnetischen Signale von der Rotmanlinse 22 auf die Gruppenantenne 24 erfolgt. Bei einer Verwendung der Gruppenantenne 24 als Empfangsantenne erfolgt die Signalausbreitung auf dem umgekehrten Weg.

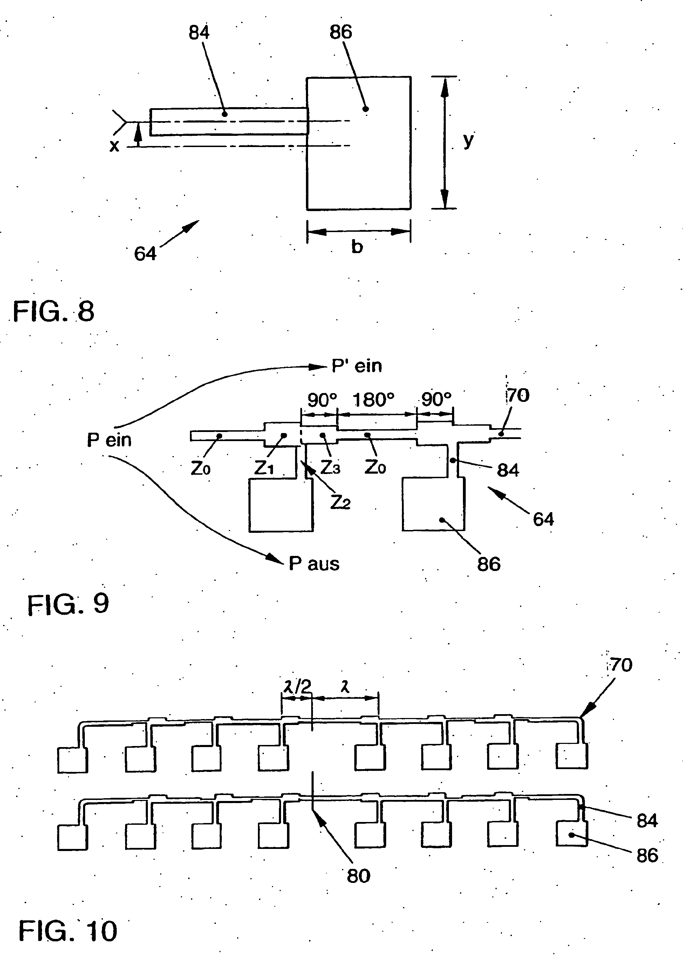

In den Fig. 8 bis 10 ist eine genauere Ausgestaltung der Einzelantennen sowie der Reihen 70 von Einzelantennen 64 im Detail dargestellt.

Fig. 8 zeigt eine Einzelantenne 64 mit einer Zuleitung 84, die als Mikrostreifenleitung ausgebildet ist, und mit einer Strahlungsfläche 86, die auch Patch genannt wird. Die Länge der Strahlungsfläche 86, in Fig. 8 mit y bezeichnet, ist durch die Frequenz des hochfrequenten Signals vorgegeben und entspricht im wesentlichen der halben Wellenlänge der Strahlung im Substrat. Dagegen sind die Breite (b) und die relative Lage des Einspeisepunktes (x) in Grenzen wählbar, wobei beide Parameter aufeinander abgestimmt sind, um eine gute Eingangsanpassung zu gewährleisten. Die mit y gekennzeichnete Kante der Strahlungsfläche 86 wird auch als nicht strahlende Seite und die beiden mit b gekennzeichneten Kanten als strahlenden Seiten der Strahlungsfläche 86 bezeichnet. Die beiden Parameter Breite (b) und Länge (y) sind in Grenzen veränderbar, wodurch die Größe der aus der Reihe 70 für die jeweilige Einzelantenne 64 ausgekoppelten Leistung und darüber die Amplitudenverteilung innerhalb der Reihe 70 einstellbar ist.

Zur Ansteuerung einer Reihe 70 von Einzelantennen 64 wird ein Speisenetzwerk in Form einer Dreitor-Serienschaltung aufgebaut, wie sie in Fig. 9 dargestellt ist. Ein Dreitor ist aus zwei λ/4-Transformatoren und einem Einzelantennen-Abzweig zusammengesetzt. Unter der Voraussetzung, daß alle Einzelantennen 64 gleichphasig arbeiten, müssen die Auskoppelpunkte demnach elektrisch 360° voneinander entfernt sein. Das Verbindungstück zwischen zwei Dreitoren muß deshalb eine elektrischen Phasendrehung von 180° realisieren. Die einzelnen Dreitore sind weiterhin so ausgelegt, daß je nach gewünschter Amplitudenbelegung der Einzelantennen 64 entlang der Reihe 70 ein definierter Anteil der Leistung $P_{ein}$ im Speisestrang in die Zuleitung der Einzelantenne 64 ausgekoppelt wird.

Für die einzelnen Impedanzen gilt bei festgelegtem auszukoppelnden Anteil $\alpha$ und freigewähltem Impedanzniveau $Z_0$ des Speisestranges:

$$Z_1 = \sqrt{\alpha\, Z_0 Z_2}\,,$$

$$Z_3 = \sqrt{\alpha(1-\alpha)^{-1}\, Z_0 Z_2}\,.$$

Aus den Formeln wird klar, daß neben dem Impedanzniveau $Z_0$ auch der Anteil der ausgekoppelten Leistung frei gewählt werden kann. $Z_2$ ist das Impedanzniveau der Zuleitung 84 der Einzelantenne 64, während $Z_0$ als Impedanzniveau des Speisestranges bezeichnet werden soll.

Neben der in Fig. 9 dargestellten Anordnung abgezweigter Einzelantennen können diese auch innerhalb des Stranges in Reihe angeordnet bzw. aufgefädelt sein. Die Amplitude der jeweils ausgekoppelten Signale wird dann über die Breite der Strahlungsflächen gesteuert.

In Fig. 10 ist die Positionierung der Anschlußpunkte 80 entlang zweier Reihen 70 dargestellt. Die Anschlußpunkte 80 sind im wesentlichen in der Mitte der Reihen 70 angeordnet, wobei, wie Fig. 10 zeigt, eine Unterteilung in $\lambda/2$ und $\lambda$ vorgenommen wird, um bei sich entlang der Reihen 70 in zwei verschiedenen Richtungen ausbreitenden elektromagnetischen Wellen eine gleiche Phase der links und rechts vom Anschlußpunkt 80 liegenden Einzelantennen 64 zu gewährleisten.

Bei den zuvor beschriebenen Ausführungsbeispielen der Radarantenne 4 sind die Substrate der Rotmanlinse 22 und der Gruppenantenne 24 aus einem keramikgefüllten Komposit aus Polytetrafluoroethylene (PTFE) hergestellt. Dadurch wird eine flexible Ausgestaltung der Form der Radarantenne 4 und nicht zuletzt darüber auch des Radarsensors 2 ermöglicht.

Weisen darüber hinaus die Substrate 72 und 74 unterschiedliche Dielektrizitätskonstanten auf, so kann die Größe der Rotmanlinse 22 bei einer Verwendung einer hohen Dielektrizitätkonstante unabhängig von der durch die äußere Form der Gruppenantenne 24 vorgegebenen Abmessungen hinaus verkleinert werden.

Schließlich sei hervorgehoben, daß bei dem in Fig. 6 dargestellten Ausführungsbeispiel der Radarantenne die Führung der Verzögerungsleitungen im Rahmen des Designs notwendigen gewählt werden können.

**Patentansprüche**

1. Radarantenne,

   - mit einer Rotmanlinse (22), die eine linsenförmige Parallelplattenleitung (56), mindestens zwei Zuleitungsanschlüsse (58), eine Mehrzahl von Ankopplungsanschlüssen (60) und Verzögerungsleitungen (62) aufweist, und
   - mit einer Gruppenantenne (24), die eine Mehrzahl von Einzelantennen (64) aufweist, die zu mindestens zwei Reihen (66) jeweils in Serie geschaltet sind,

   **dadurch gekennzeichnet,**

   - **daß** die Rotmanlinse (22) und die Gruppenantenne (24) im wesentlichen parallel und beabstandet zueinander angeordnet sind.

2. Radarantenne nach Anspruch 1, **dadurch gekennzeichnet,**

   - **daß** die Rotmanlinse (22) auf einem ersten Substrat (72) und die Gruppenantenne (24) auf einem zweiten Substrat (74) ausgebildet sind,
   - **daß** die beiden Substrate (72, 74) mit ihren der Rotmanlinse (22) bzw. der Gruppenantenne (24) abgewandten Seiten miteinander verbunden sind und
   - **daß** zwischen den beiden Substraten (72, 74) eine gemeinsame Metallisierungsschicht (76) angeordnet ist.

3. Radarantenne nach Anspruch 2, **dadurch gekennzeichnet, daß** die Metallisierungsschicht (76) als gemeinsames Massepotential dient.

4. Radarantenne nach einem der Ansprüche 2 oder 3, **dadurch gekennzeichnet, daß** Koppelschlitze (78) in der Metallisierungsschicht (76) ausgebildet sind, die die Anschlußpunkte (80) der Reihen (70) von Einzelantennen (64) mit den Anschlußpunkten (82) der Verzögerungsleitungen (62) elektromagnetisch koppeln.

5. Radarantenne nach Anspruch 4, **dadurch gekennzeichnet, daß** die Anschlußpunkte (80) der Reihen (70) von Einzelantennen (64) im wesentlichen in der Mitte der Reihen (70) angeordnet sind.

6. Radarantenne nach einem der Ansprüche 1 bis 5, **dadurch gekennzeichnet, daß** die Substrate (72,74) für die Rotmanlinse (22) und die Gruppenantenne (24) aus einem keramikgefüllten Komposit aus Polytetrafluoroethylene (PTFE) hergestellt sind.

7. Radarantenne nach einem der Ansprüche 1 bis 6, **dadurch gekennzeichnet, daß** die Substrate für die Rotmanlinse (22) und für die Gruppenantenne (24) unterschiedliche Dielektrizitätskonstanten aufweisen.

**Revendications**

1. Antenne radar

   - comprenant une lentille Rotman (22) qui présente une conduite à plaques parallèles (56), au moins deux raccords pour conduite d'arrivée (58), une pluralité de raccords d'accouplement (60) et des lignes à retard (62), et
   - comprenant une antenne en réseau (24) qui présente une pluralité d'antennes individuelles (64) qui sont branchées en au moins deux rangées (66) à chaque fois en série,

   **caractérisée en ce**

   - **que** la lentille Rotman (22) et l'antenne en réseau (24) sont disposées pour l'essentiel parallèlement et espacées l'une de l'autre.

2. Antenne radar selon la revendication 1, **caractérisée en ce**

   - **que** la lentille Rotman (22) est réalisée sur un premier substrat (72) et l'antenne en réseau (24) sur un deuxième substrat (74),
   - **que** les deux substrats (72, 74) sont reliés ensemble avec leurs côtés à l'opposé de la lentille Rotman (22) ou de l'antenne en réseau (24) et
   - **qu'**une couche de métallisation commune (76) est disposée entre les deux substrats (72, 74).

3. Antenne radar selon la revendication 2, **caractérisée en ce que** la couche de métallisation (76) sert de potentiel de masse commun.

4. Antenne radar selon l'une des revendications 2 ou 3, **caractérisée en ce que** des fentes de couplage (78) sont réalisées dans la couche de métallisation (76), lesquelles réalisent le couplage électromagnétique entre les points de raccordement (80) des rangées (70) d'antennes individuelles (64) et les points de raccordement (82) des lignes à retard (62).

5. Antenne radar selon la revendication 4, **caractérisée en ce que** les points de raccordement (80) des rangées (70) d'antennes individuelles (64) sont pour l'essentiel disposés au centre des rangées (70).

6. Antenne radar selon l'une des revendications 1 à 5, **caractérisée en ce que** les substrats (72, 74) pour la lentille Rotman (22) et l'antenne en réseau (24) sont fabriqués dans un composite de polytétrafluoroéthylène (PTFE) rempli de céramique.

7. Antenne radar selon l'une des revendications 1 à 6, **caractérisée en ce que** les substrats pour la lentille Rotman (22) et l'antenne en réseau (24) présentent des constantes diélectriques différentes.

**Claims**

1. Radar antenna,

   - having a Rotman lens (22), which has a parallel plate line (56) in the form of a lens, at least two supply line connections (58), a plurality of coupling connections (60) and delay lines (62), and
   - having an antenna array (24), which has a plurality of individual antennas (64) which are each connected in series to form at least two rows (66),

   **characterized**

   - **in that** the Rotman lens (22) and the antenna array (24) are arranged essentially parallel to and at a distance from one another.

2. Radar antenna according to Claim 1, **characterized**

   - **in that** the Rotman lens (22) is formed on a first substrate (72) and the antenna array (24) is formed on a second substrate (74),
   - **in that** the two substrates (72, 74) are connected to one another by their sides facing away from the Rotman lens (22) and the antenna array (24), respectively, and
   - **in that** a common metallization layer (76) is arranged between the two substrates (72, 74).

3. Radar antenna according to Claim 2, **characterized in that** the metallization layer (76) is used as a common earth potential.

4. Radar antenna according to one of Claims 2 or 3, **characterized in that** coupling slots (78) are formed in the metallization layer (76) and electromagnetically couple the connecting points (80) of the rows (70) of individual antennas (64) to the connecting points (82) of the delay lines (62).

5. Radar antenna according to Claim 4, **characterized in that** the connecting points (80) of the rows (70) of individual antennas (64) are arranged essentially in the centre of the rows (70).

6. Radar antenna according to one of Claims 1 to 5, **characterized in that** the substrates (72, 74) for the Rotman lens (22) and for the antenna array (24) are produced from a ceramic-filled composite of polytetrafluoroethylene (PTFE).

7. Radar antenna according to one of Claims 1 to 6, **characterized in that** the substrates for the Rotman lens (22) and for the antenna array (24) have different dielectric constants.

FIG. 1

FIG. 2

EP 1 420 267 B1

FIG. 3

FIG. 4

FIG. 5

**FIG. 6**

**FIG. 7**

FIG. 8

FIG. 9

FIG. 10